# EUROPÄISCHE PATENTANMELDUNG

(11) **EP 0 818 370 A2**
(43) Veröffentlichungstag der Anmeldung: **14.01.1998**
(21) Anmeldenummer: 97111299.0
(22) Anmeldetag: 04.07.1997
(51) Int. Cl.: B60R 22/18

(54) **Befestigungsteil für ein Halteseil in einem Fahrzeug-Sicherheitsgurtsystem**

(30) Priorität: 05.07.1996 DE 19627202; 19.09.1996 DE 19638441; 05.03.1997 DE 29704021 U
(71) Anmelder: TRW Occupant Restraint Systems GmbH, 73551 Alfdorf (DE)
(72) Erfinder: Wier, Franz, 73571 Göggingen (DE)
(74) Vertreter: Degwert, Hartmut, Dipl.-Phys.

(57) **Zusammenfassung**

Ein Befestigungsteil (10) für ein Halteseil (18) in einem Fahrzeug-Sicherheitsgurtsystem, mit einem Befestigungsblatt (12), das mit einer Bohrung (14) für eine Befestigungsschraube versehen ist, und einem Halteabschnitt (16), in den das Halteseil (18) eingepreßt ist, ist dadurch gekennzeichnet, daß das Befestigungsteil (10) aus Aluminium oder einer Aluminiumlegierung besteht.

## Beschreibung

Die Erfindung betrifft ein Befestigungsteil für ein Halteseil in einem Fahrzeug-Sicherheitsgurtsystem, mit einem Befestigungsblatt, das mit einer Bohrung für eine Befestigungsschraube versehen ist, und einem Halteabschnitt, in den das Halteseil eingepreßt ist.

Ein solches Befestigungsteil wird üblicherweise hergestellt, indem ein aus Stahl bestehendes Fertigteil auf ein Ende des Halteseils aufgeschoben und mit diesem verpreßt wird. Aufgrund der vergleichsweise hohen Festigkeit des für das Fertigteil verwendeten Materials ergibt sich eine hohe Haltekraft für das Halteseil in dem Halteabschnitt des Befestigungsteils. Jedoch führt genau diese hohe Festigkeit, die hinsichtlich der Haltekraft des Halteseils in dem Halteteil zu Vorteilen führt, zu Nachteilen sowohl bei der Herstellung des Fertigteils als auch bei der Herstellung des Befestigungsteils. Diese Nachteile bestehen insbesondere aus einem hohen Energieaufwand für die Herstellung bzw. Umformung des Fertigteils und einem hohen Aufwand beim Verpressen des Fertigteils mit dem Halteseil.

Die Erfindung stellt ein Befestigungsteil bereit, bei dem der Herstellungs- bzw. Umformungsaufwand gegenüber aus Stahl bestehenden Befestigungsteilen erheblich vermindert ist. Gemäß der Erfindung ist vorgesehen, daß das Befestigungsteil aus Aluminium oder einer Aluminiumlegierung besteht. Die Erfindung beruht auf der für den Fachmann überraschenden Erkenntnis, daß auch mit Aluminium oder einer Aluminiumlegierung, deren Festigkeit im allgemeinen unterhalb derjenigen von Stahl liegt, eine ausreichende Haltekraft des Halteseils in dem Halteabschnitt erzielt werden kann. Dies liegt insbesondere daran, daß es beim Verpressen des Halteabschnittes mit dem Halteseil zu einer Kaltverfestigung des verwendeten Aluminiums oder der verwendeten Aluminiumlegierung kommt, aufgrund derer die Festigkeit erheblich gesteigert wird. Diese Festigkeitssteigerung führt letztendlich dazu, daß die verwendeten Materialquerschnitte eines erfindungsgemäßen Befestigungsteils gegenüber denjenigen eines herkömmlichen Befestigungsteils aus Stahl nicht wesentlich erhöht werden müssen, um die gleiche Festigkeit zu erreichen, wobei zugleich eine Gewichtsersparnis erzielt wird.

Durch die im Vergleich zu Stahl höhere Umformbarkeit von Aluminium oder Aluminiumlegierungen ergeben sich eine Reihe von Vorteilen bei der Herstellung eines erfindungsgemäßen Befestigungsteils. Wenn ein geeignet gestalteter Rohling für das Befestigungsteil verwendet wird, beispielsweise ein Rohrabschnitt oder ein Profilabschnitt, kann in einem einzigen Umformschritt aus dem Rohling, in den vor dem Umformen das Halteseil eingelegt ist, das Befestigungsteil mit Befestigungsblatt und Halteabschnitt gebildet werden, in den das Halteseil eingepreßt ist. Auf diese Weise lassen sich die notwendigen Fertigungsschritte sehr stark reduzieren. Für Einzelheiten eines solchen Verfahrens, mit dem gleichzeitig mit dem Umformen des Rohlings dieser auf ein Seil aufgepreßt wird, wird auf die am 19. September 1996 eingereichte deutsche Patentanmeldung 196 38 441 verwiesen, deren Offenbarung als in die vorliegende Anmeldung eingeschlossen betrachtet wird.

Aufgrund der guten Umformbarkeit von Aluminium oder Aluminiumlegierungen kann die Bohrung in dem Befestigungsblatt auf eine besonders vorteilhafte Weise erzielt werden. Im Gegensatz zu herkömmlichen Verfahren, bei denen die Bohrung entweder ausgestanzt wird oder mit einem Bohrer gebohrt wird, dessen Durchmesser dem Durchmesser der herzustellenden Bohrung entspricht, kann bei einem erfindungsgemäßen Befestigungsteil zuerst ein Loch gebildet werden, dessen Durchmesser kleiner als der Durchmesser der herzustellenden Bohrung ist. Dieses Loch wird in einem nachfolgenden Bearbeitungsschritt mittels eines Dorns aufgeweitet, der in das Loch eingedrückt wird. In Abhängigkeit von dem zu erzielenden Durchmesser der Bohrung und dem Durchmesser des verwendeten Lochs kann bereits ein einziger Aufweitschritt mit einem einzigen Dorn ausreichen; es kann sich jedoch auch als notwendig herausstellen, mehrere Aufweitschritte nacheinander durchzuführen. Eine auf diese Weise erzielte Bohrung bietet einige Vorteile: Zum einen ist der Herstellungsaufwand geringer als bei einer auf üblichem Wege hergestellten Bohrung, da nur ein geringerer Materialquerschnitt mit einem spanenden Bearbeitungsschritt entfernt werden muß. Das Aufweiten des Loches ist mit einem sehr geringen Aufwand zu erzielen, da lediglich ein Eindrücken eines Dorns in axialer Richtung notwendig ist. Besonders vorteilhaft ist die sich bei dieser Vorgehensweise einstellende Kaltverfestigung des Materials um die Bohrung herum. Wenn diese Kaltverfestigung geeignet bei der Dimensionierung des Befestigungsblattes berücksichtigt wird, ergeben sich Materialeinsparungen. Für Einzelheiten eines solchen Verfahrens, mit dem eine Bohrung durch Aufweiten eines Lochs erhalten wird, wird auf die am 5. Juli 1996 eingereichte deutsche Patentanmeldung 196 27 202 verwiesen, deren Offenbarung als in die vorliegende Anmeldung eingeschlossen betrachtet wird.

Die Erfindung wird nachfolgend anhand von einigen Ausführungsbeispielen beschrieben, die in den Zeichnungen dargestellt sind. In diesen zeigen:
- die Figuren 1a, 1b und 1c in einer Draufsicht, Schnittansicht bzw. Seitenansicht ein erfindungsgemäßes Befestigungsteil gemäß einer ersten Ausführungsform;
- die Figuren 2a, 2b und 2c in einer Draufsicht, Schnittansicht bzw. Seitenansicht ein Befestigungsteil gemäß dem Stand der Technik;
- die Figuren 3a, 3b und 3c in einer Draufsicht, Schnittansicht bzw. Seitenansicht ein erfindungsgemäßes Befestigungsteil gemäß einer zweiten Ausführungsform;
- Figur 4 in einer Draufsicht eine Variante des Befestigungsteils von Figur 3a;
- Figur 5 in einer Draufsicht ein erfindungsgemäßes Befestigungsteil gemäß einer dritten Ausführungsform;
- die Figuren 6a und 6b in einer Draufsicht bzw. Seitenansicht eine Variante des Befestigungsteils von Figur 5;
- die Figuren 7a, 7b, 7c und 7d in einer Draufsicht, Schnittansicht bzw. Seitenansicht ein erfindungsgemäßes Befestigungsteil gemäß einer vierten Ausführungsform;
- die Figuren 8a, 8b und 8c in einer Draufsicht, Schnittansicht bzw. Seitenansicht ein erfindungsgemäßes Befestigungsteil gemäß einer fünften Ausführungsform;
- Figur 9 ein erfindungsgemäßes Befestigungsteil in einem Herstellungs-Zwischenschritt; und
- Figur 10 ein erfindungsgemäßes Befestigungsteil in einem weiteren Herstellungs-Zwischenschritt.

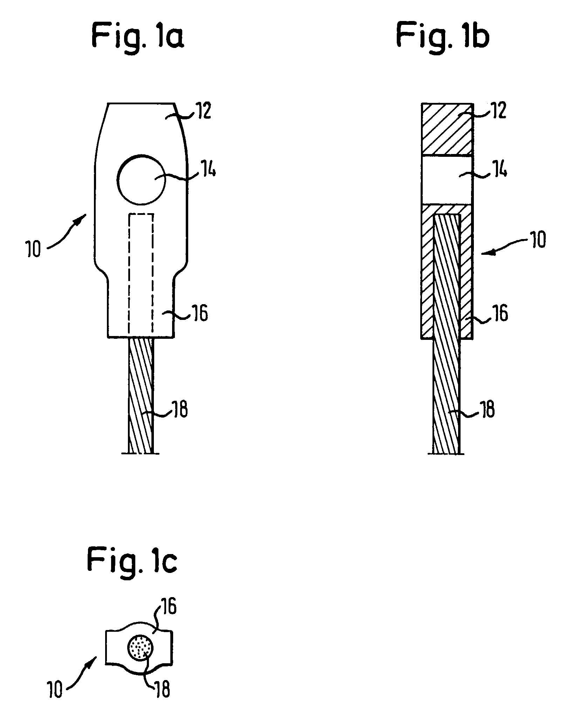

In den Figuren 1a, 1b und 1c ist ein erfindungsgemäßes Befestigungsteil gemäß einer ersten Ausführungsform dargestellt. Das Befestigungsteil 10 weist ein Befestigungsblatt 12 auf, das mit einer Bohrung 14 für eine Befestigungsschraube versehen ist, mit der das Befestigungsteil fahrzeugfest angebracht werden kann. Das Befestigungsteil 10 weist außerdem einen Halteabschnitt 16 auf, in den ein Halteseil 18 eingepreßt ist, an dessen anderem Ende beispielsweise ein Gurtschloß des Fahrzeug-Sicherheitsgurtsystems befestigt werden kann.

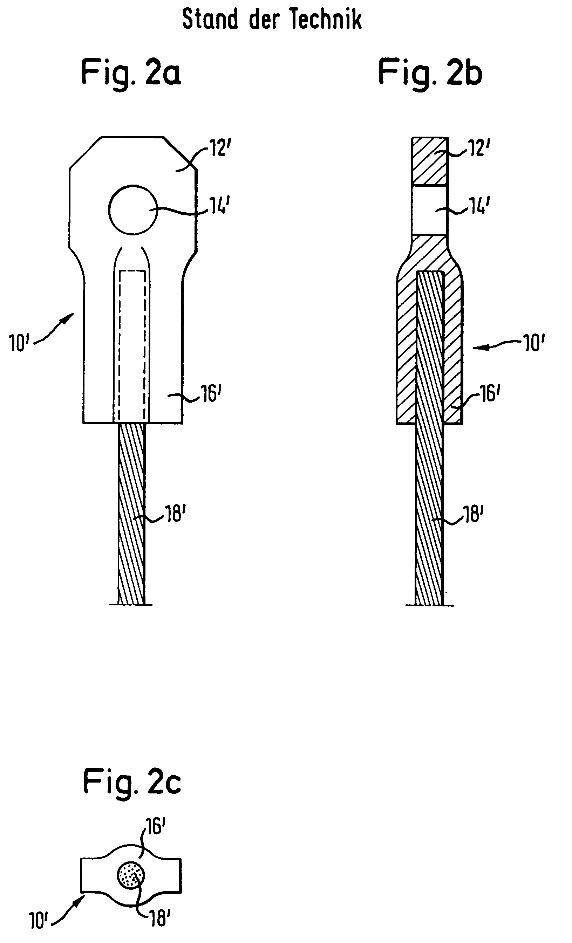

In den Figuren 2a, 2b und 2c ist ein Befestigungsteil gemäß dem Stand der Technik dargestellt. In diesen Figuren werden für Elemente, die aus den Figuren 1a, 1b und 1c bekannt sind, dieselben Bezugszeichen, ergänzt um einen Strich, verwendet.

Das erfindungsgemäße Befestigungsteil 10 besteht aus Aluminium oder einer Aluminiumlegierung, während das Befestigungsteil 10' gemäß dem Stand der Technik aus Stahl besteht. Für das Halteseil 18 bzw. 18' wird in beiden Fällen als Material Stahl verwendet.

Aufgrund der unterschiedlichen Materialien für das Befestigungsteil ergeben sich eine Reihe von Unterschieden hinsichtlich der Gestaltung des Befestigungsteils 10 gegenüber dem Befestigungsteil 10'. Das erfindungsgemäße Befestigungsteil weist, gemessen in einer Richtung parallel zur Längsachse der Bohrung 14, eine im wesentlichen konstante Dicke auf. Im Gegensatz dazu weist das Befestigungsteil 10' gemäß dem Stand der Technik am Befestigungsblatt 12', gemessen in einer Richtung parallel zur Längsachse der Bohrung 14', eine geringere Dicke auf als der Halteabschnitt 16'. Ferner ist das erfindungsgemäße Befestigungsteil 10 am Übergang zwischen dem Befestigungsblatt 12 und dem Halteabschnitt 16 nicht eingeschnürt; der Halteabschnitt 16 weist also an seinem dem Befestigungsblatt 12 zugewandten Ende, gemessen in einer Richtung senkrecht zur Längsachse der Bohrung und senkrecht zur Längsachse des Halteseils, etwa die gleiche Breite auf wie das Befestigungsblatt 12. Lediglich zum freien Ende des Halteabschnittes 16 hin ist dessen Breite stufenartig vermindert. Dagegen weist das Befestigungsteil 10' nach dem Stand der Technik einen Halteabschnitt 16' auf, dessen Breite, gemessen in einer Richtung senkrecht zur Längsachse der Bohrung und senkrecht zur Längsachse des Halteseils, durchgehend eine wesentlich geringere Breite als das Befestigungsblatt 12' hat; es liegt also eine Einschnürung im Bereich des Übergangs vom Befestigungsblatt 12' zum Halteabschnitt 16' vor. Aufgrund der speziellen Gestaltung des erfindungsgemäßen Befestigungsteils 10 kann das Halteseil 18 sehr viel weiter in das Befestigungsteil 10 hineingesteckt werden, als dies bei einem Befestigungsteil gemäß dem Stand der Technik möglich ist, ohne daß es zu einer Verminderung der Haltekraft des Halteseils 18 in dem Befestigungsteil 10 kommt. Wie in den Figuren 1a und 1b zu sehen ist, kann das Halteseil 18 bis fast an die Bohrung 14 angrenzend in das Befestigungsteil 10 eingeschoben werden.

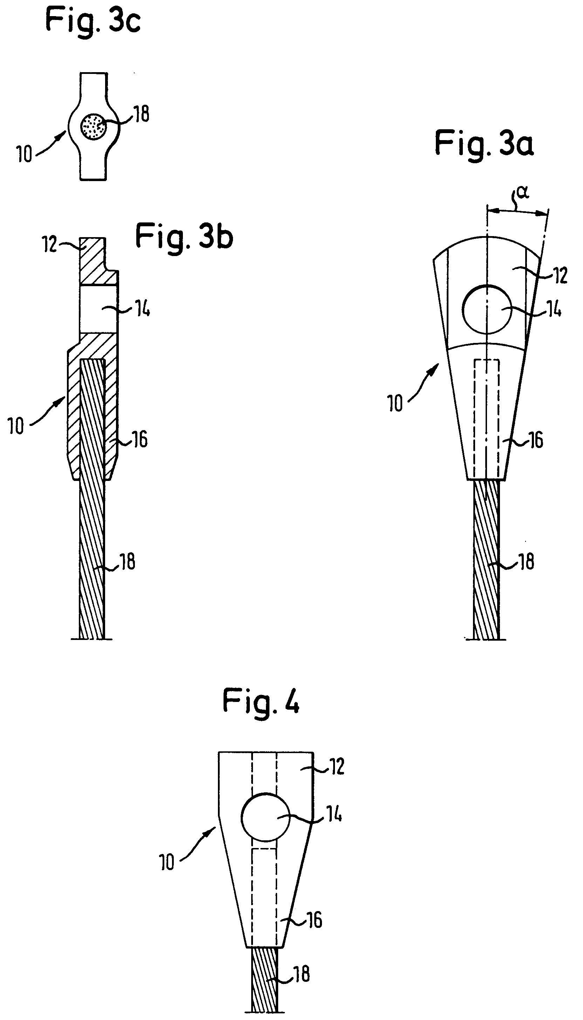

In den Figuren 3a, 3b und 3c ist ein erfindungsgemäßes Befestigungsteil 10 gemäß einer zweiten Ausführungsform dargestellt. Die zweite Ausführungsform unterscheidet sich von der ersten Ausführungsform insbesondere dadurch, daß die Außenkante des Halteabschnittes 16 und des Befestigungsblatts 12 nicht parallel zur Längsachse des Halteseils 18 verläuft, sondern in einem Winkel α, der zwischen etwa 3,5° und etwa 6° beträgt. Zur Verdeutlichung ist dieser Winkel in Figur 3a übertrieben dargestellt. Weiterhin unterscheidet sich die zweite Ausführungsform von der ersten Ausführungsform dadurch, daß die Dicke des Befestigungsblattes 12, gemessen in einer Richtung parallel zur Längsachse der Bohrung 14, geringer als die Dicke des Halteabschnittes 16 ist.

In Figur 4 ist eine Variante der in den Figuren 3a, 3b und 3c dargestellten Ausführungsform gezeigt. Diese Variante unterscheidet sich von der zweiten Ausführungsform lediglich dadurch, daß nur der Halteabschnitt 16 mit einer schräg verlaufenden Außenkante gebildet ist, während die Außenkante des Befestigungsblattes 12 parallel zur Längsachse des Halteseils 18 verläuft.

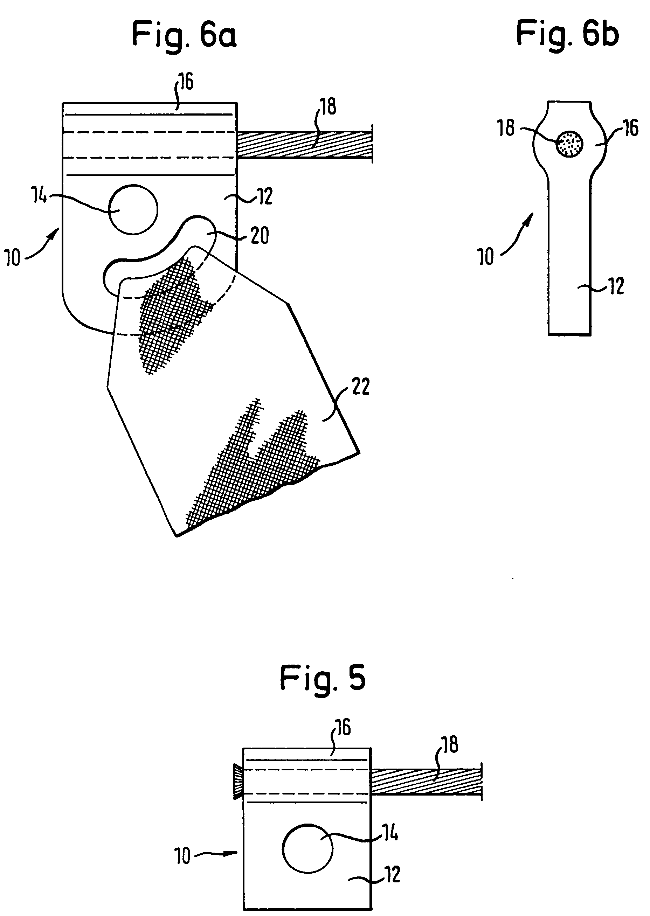

In Figur 5 ist ein erfindungsgemäßes Befestigungsteil gemäß einer dritten Ausführungsform der Erfindung dargestellt. Im Gegensatz zu dem Befestigungsteil gemäß der ersten und der zweiten Ausführungsform ist bei dem Befestigungsteil gemäß der dritten Ausführungsform das Befestigungsblatt 12 nicht in der axialen Verlängerung des Halteabschnittes 16 angeordnet, sondern neben diesem. Dies ergibt eine in axialer Richtung besonders kurze Baulänge. Das freie Ende des Halteseils 18 tritt aus dem Halteabschnitt 16 wieder aus, was zu einer höheren Haltekraft des Halteteils 18 in dem Halteabschnitt 16 führt. Im Gegensatz zu den Befestigungsteilen gemäß der ersten und der zweiten Ausführungsform, die vorzugsweise durch Umformen eines Rohlings hergestellt sind, der aus einem Rohrabschnitt besteht, ist das Befestigungsteil gemäß der dritten Ausführungsform durch Umformen eines Rohlings hergestellt, der aus einem Abschnitt eines Profilteils gebildet ist.

In den Figuren 6a und 6b ist eine Variante des in Figur 5 dargestellten Befestigungsteils gezeigt. Gemäß dieser Variante ist in dem Befestigungsblatt 12 ein Schlitz 20 gebildet, in welchem eine Gurtbandschlaufe 22 befestigt werden kann.

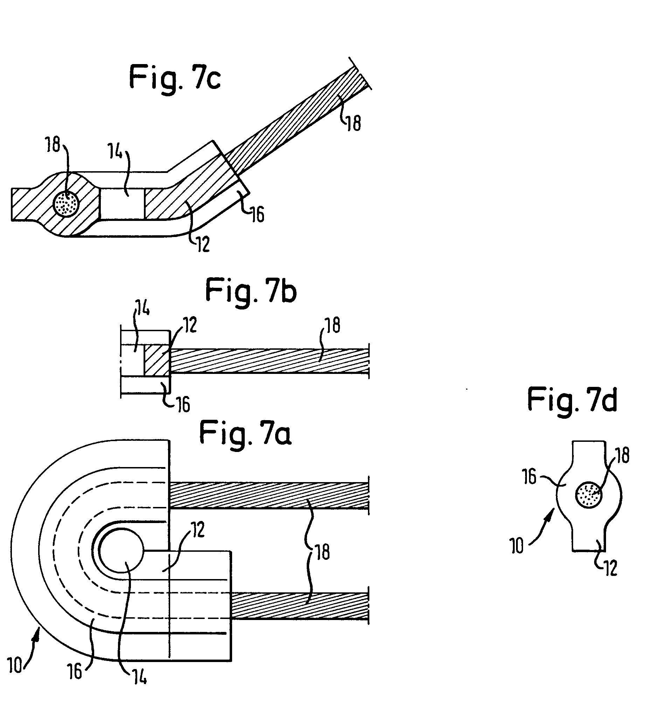

In den Figuren 7a, 7b, 7c und 7d ist ein erfindungsgemäßes Befestigungsteil gemäß einer vierten Ausführungsform dargestellt, wobei im oberen Abschnitt von Figur 7a eine erste Variante dargestellt ist, auf die sich die Schnittansicht 7b bezieht, und in der unteren Hälfte von Figur 7a eine zweite Variante, auf die sich die Schnittansicht von Figur 7c bezieht. Bei dieser Ausführungsform umschlingt das Halteseil 18 die Bohrung 14, wobei das Halteseil 18 mit zwei Abschnitten parallel zueinander aus dem Befestigungsteil 10 austritt. Wie in Figur 7d zu sehen ist, ist gemäß dieser Ausführungsform das Befestigungsteil 10 aus einem Profilstück gebildet, das um 180° umgebogen ist, so daß in dem von dem Halteseil 18 eingeschlossenen Bereich das Befestigungsblatt 12 gebildet ist, in welchem die Bohrung 14 angebracht ist. Gemäß der in Figur 7b dargestellten Variante tritt das Halteseil 18 aus dem Befestigungsteil 10 in der Ebene aus, die von dem Befestigungsblatt 12 definiert ist. Gemäß der in Figur 7c dargestellten Variante ist das freie Ende des Halteabschnittes 16 gegenüber der Ebene, die von dem Befestigungsblatt 12 definiert ist, abgewinkelt, so daß das Halteseil 18 gegenüber dieser Ebene schräg austritt. Die in diesen Figuren dargestellte Ausführungsform ist insbesondere dann von Vorteil, wenn gleichzeitig zwei Gurtschlösser mit einem Befestigungspunkt am Fahrzeug verbunden werden sollen.

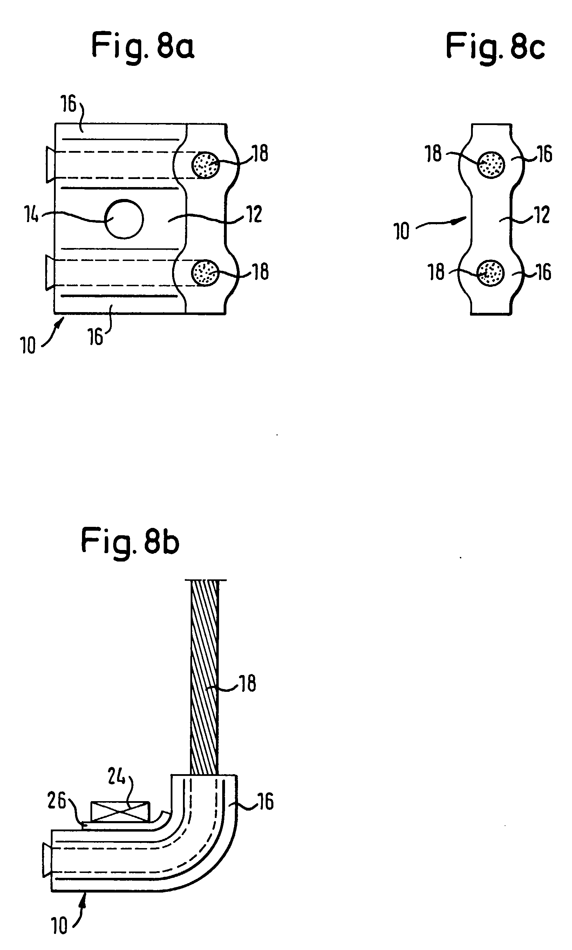

In den Figuren 8a, 8b und 8c ist ein erfindungsgemäßes Befestigungsteil gemäß einer fünften Ausführungsform dargestellt. Dieses Befestigungsteil unterscheidet sich von dem Befestigungsteil gemäß der vierten Ausführungsform im wesentlichen dadurch, daß der Halteabschnitt 16 um 90° abgewinkelt ist, so daß das Halteseil 18 etwa senkrecht zu der Ebene verläuft, die durch das Befestigungsblatt 12 gebildet ist. In Figur 8b ist die Befestigungsschraube 24 sowie eine Unterlegscheibe 26 zu sehen, mit der das Befestigungsteil am Fahrzeug angeschraubt ist.

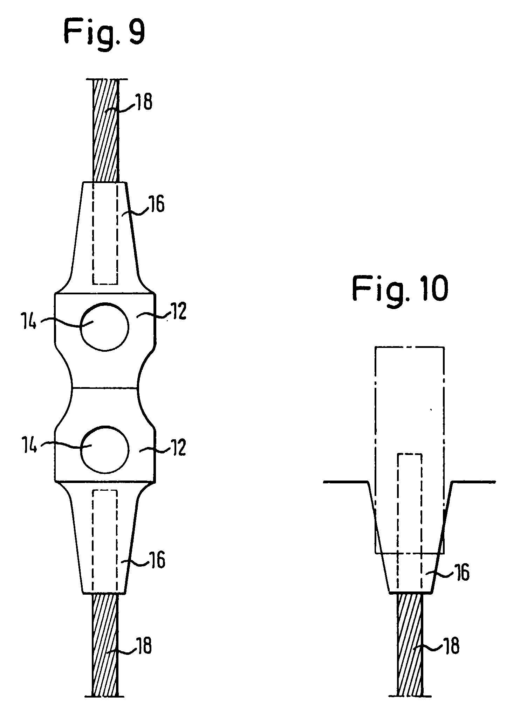

In Figur 9 ist ein erfindungsgemäßes Befestigungsteil in einem Herstellungs-Zwischenschritt dargestellt. Im Hinblick auf eine kostengünstige Fertigung werden für das Umformen des Rohlings in das Befestigungsteil vorzugsweise zwei zusammenhängende Rohlinge verwendet, so daß sich zwei zusammenhängende Befestigungsteile ergeben. Diese müssen lediglich voneinander getrennt werden.

In Figur 10 ist ein erfindungsgemäßes Befestigungsteil in einem weiteren Herstellungs-Zwischenschritt dargestellt. Dieser Zwischenschritt besteht darin, den Halteabschnitt 16 in eine konische Gestalt umzuformen, wie dies gemäß der zweiten Ausführungsform der Erfindung vorgesehen ist. Durch das konische Aufpressen des Rohlings auf das Halteseil 18 werden die Haltekräfte des Halteseils 18 in dem Halteabschnitt 16 erhöht.

## Patentansprüche

1. Befestigungsteil (10) für ein Halteseil (18) in einem Fahrzeug-Sicherheitsgurtsystem, mit einem Befestigungsblatt (12), das mit einer Bohrung (14) für eine Befestigungsschraube versehen ist, und einem Halteabschnitt (16), in den das Halteseil (18) eingepreßt ist, dadurch gekennzeichnet, daß das Befestigungsteil (10) aus Aluminium oder einer Aluminiumlegierung besteht.

2. Befestigungsteil nach Anspruch 1, dadurch gekennzeichnet, daß das Befestigungsblatt (12) in der axialen Verlängerung des Halteabschnitts (16) angeordnet ist.

3. Befestigungsteil nach Anspruch 2, dadurch gekennzeichnet, daß der Halteabschnitt (16), gemessen in der Richtung der Längsachse der Bohrung (14), etwa die gleiche Dicke wie das Befestigungsblatt (12) hat.

4. Befestigungsteil nach Anspruch 2, dadurch gekennzeichnet, daß der Halteabschnitt (16), gemessen in der Richtung der Längsachse der Bohrung (14), eine größere Dicke als das Befestigungsblatt (12) hat.

5. Befestigungsteil nach einem der Ansprüche 2 bis 4, dadurch gekennzeichnet, daß der Halteabschnitt (16) an seinem freien Ende, gemessen in einer Richtung senkrecht zur Längsachse der Bohrung (14) und senkrecht zur Längsachse des Halteseils (18), eine geringere Breite als an seinem Übergang zum Befestigungsblatt (12) hat.

6. Befestigungsteil nach einem der Ansprüche 2 bis 4, dadurch gekennzeichnet, daß die Breite des Halteabschnittes (16) stufenartig etwa in dessen Mitte zunimmt.

7. Befestigungsteil nach einem der Ansprüche 2 bis 4, dadurch gekennzeichnet, daß die Breite des Halteabschnittes (16) kontinuierlich von seinem freien Ende zu seinem Übergang in das Befestigungsblatt (12) hin zunimmt.

8. Befestigungsteil nach einem der Ansprüche 2 bis 7, dadurch gekennzeichnet, daß die Breite des Befestigungsblattes (12) kontinuierlich von seinem Übergang in den Halteabschnitt (16) zu seinem freien Ende hin zunimmt.

9. Befestigungsteil nach einem der Ansprüche 7 und 8, dadurch gekennzeichnet, daß der Winkel zwischen der Außenkante des Befestigungsteils (10), die in einer Ebene senkrecht zur Längsachse der Bohrung (14) liegt, und der Längsachse des in den Halteabschnitt (16) eingeschlossenen Halteseils (18) etwa 3,5° bis etwa 6° beträgt.

10. Befestigungsteil nach einem der Ansprüche 2 bis 9, dadurch gekennzeichnet, daß sich das Halteseil (18) bis annähernd zu der Bohrung (14) hin erstreckt.

11. Befestigungsteil nach Anspruch 1, dadurch gekennzeichnet, daß der Halteabschnitt (16) umlaufend um das Befestigungsblatt (12) ausgebildet ist, so daß das Halteseil (18) das Befestigungsblatt (12) umschlingt.

12. Befestigungsteil nach Anspruch 11, dadurch gekennzeichnet, daß das Halteseil (18) aus dem Halteabschnitt (16) beiderseits des Befestigungsblattes (12) in zueinander parallelen Richtungen austritt.

13. Befestigungsteil nach einem der Ansprüche 11 und 12, dadurch gekennzeichnet, daß das Befestigungsblatt (12), gemessen in der Richtung der Längsachse der Bohrung (14), eine geringere Dicke als der Halteabschnitt (16) hat.

14. Befestigungsteil nach einem der Ansprüche 11 bis 13, dadurch gekennzeichnet, daß das freie Ende des Halteabschnittes (16) relativ zu der Ebene abgewinkelt ist, die von dem Befestigungsblatt (12) definiert ist.

15. Befestigungsteil nach Anspruch 14, dadurch gekennzeichnet, daß der Halteabschnitt (16) um etwa 30° abgewinkelt ist.

16. Befestigungsteil nach Anspruch 14, dadurch gekennzeichnet, daß der Halteabschnitt (16) um etwa 90° abgewinkelt ist.

17. Befestigungsteil nach Anspruch 1, dadurch gekennzeichnet, daß das Befestigungsblatt (12) in der axialen Richtung des Halteseils (18) gesehen neben dem Halteabschnitt (16) angeordnet ist.

18. Befestigungsteil nach Anspruch 17, dadurch gekennzeichnet, daß das Befestigungsblatt (12), gemessen in der Richtung der Längsachse der Bohrung (14), die gleiche Dicke wie der Halteabschnitt (16) hat.

19. Befestigungsteil nach Anspruch 17, dadurch gekennzeichnet, daß das Befestigungsblatt (12), gemessen in der Richtung der Längsachse der Bohrung (14), eine geringere Dicke als der Halteabschnitt (16) hat.

20. Befestigungsteil nach einem der Ansprüche 17 bis 19, dadurch gekennzeichnet, daß das Halteseil (18) mit seinem freien Ende aus dem Halteabschnitt (16) austritt.

21. Befestigungsteil nach einem der Ansprüche 17 bis 20, dadurch gekennzeichnet, daß in dem Befestigungsblatt (12) neben der Bohrung (14) ein Schlitz (20) zur Befestigung einer Gurtbandschlaufe (22) gebildet ist.

22. Befestigungsteil nach einem der vorhergehenden Ansprüche, dadurch gekennzeichnet, daß es aus einem mit einer Öffnung für das Halteseil (18) versehenen Rohling gebildet ist.

23. Befestigungsteil nach Anspruch 22, dadurch gekennzeichnet, daß der Rohling eine buchsenförmige Gestalt hat.

24. Befestigungsteil nach Anspruch 22, dadurch gekennzeichnet, daß der Rohling ein Profilteil ist.

25. Befestigungsteil nach einem der vorhergehenden Ansprüche, dadurch gekennzeichnet, daß das Befestigungsblatt (12) durch Pressen des Rohlings gebildet ist.

26. Befestigungsteil nach einem der vorhergehenden Ansprüche, dadurch gekennzeichnet, daß der Halteabschnitt (16) durch Pressen des Rohlings gebildet ist und das Halteseil (18) vor dem Pressen in den Rohling eingelegt wurde.

27. Befestigungsteil nach einem der vorhergehenden Ansprüche, dadurch gekennzeichnet, daß der Rohling eine allgemein zylindrische Form hat und das Befestigungsblatt (12) durch Flachpressen eines axialen Endes des Rohling gebildet ist.

28. Befestigungsteil nach einem der vorhergehenden Ansprüche, dadurch gekennzeichnet, daß die Bohrung (14) durch Aufweiten eines Lochs gebildet ist, das kleinere Abmessungen als die Bohrung (14) hat.

29. Befestigungsteil nach einem der vorhergehenden Ansprüche, dadurch gekennzeichnet, daß dessen Material kaltverfestigt ist.

30. Befestigungsteil nach einem der vorhergehenden Ansprüche, dadurch gekennzeichnet, daß ein Material der Festigkeitsklassen F25 bis F55 verwendet wird.

31. Befestigungsteil nach einem der vorhergehenden Ansprüche, dadurch gekennzeichnet, daß das Halteseil (18) aus Stahl besteht.

32. Befestigungsteil nach Anspruch 31, dadurch gekennzeichnet, daß das Halteseil (18) einen Durchmesser von maximal 5,8 mm hat.

33. Befestigungsteil nach einem der vorhergehenden Ansprüche, dadurch gekennzeichnet, daß es durch Trennen von zwei identischen Befestigungsteilen (10) gebildet ist, die nach dem Pressen einstückig miteinander verbunden sind.
